# EUROPÄISCHE PATENTSCHRIFT

(11) **EP 3 957 491 B1**
(45) Veröffentlichungstag und Bekanntmachung des Hinweises auf die Patenterteilung: **30.07.2025**
(21) Anmeldenummer: 21179091.0
(22) Anmeldetag: 11.06.2021
(51) Int. Cl.: B60C 7/24, B60B 3/02, B60B 3/06, B60C 7/10, B62D 55/15

(54) **LAUFRAD FÜR EIN KETTENLAUFWERK EINES KETTENFAHRZEUGS**
RUNNING WHEEL FOR A CHAIN DRIVE OF A TRACKED VEHICLE
ROUE DE CHENILLE POUR UN VÉHICULE À CHENILLES

(30) Priorität: 17.08.2020 DE 102020210433
(43) Veröffentlichungstag der Anmeldung: 23.02.2022
(73) Patentinhaber: Kässbohrer Geländefahrzeug AG, 88471 Laupheim (DE)
(72) Erfinder: Zhirnyy, Roman, 123182 Moskau (RU); Bulychau, Anton, Minsk City (BY)
(74) Vertreter: Patentanwälte Ruff, Wilhelm, Beier, Dauster & Partner mbB

(56) Entgegenhaltungen:
- DE-A1- 3 413 321
- DE-U- 7 007 859
- US-A- 2 039 726
- US-A- 6 129 426
- US-A1- 2012 001 478

## Beschreibung

Die Erfindung betrifft ein Laufrad für ein Kettenlaufwerk eines Kettenfahrzeugs nach dem Oberbegriff des Anspruchs 1. Die Erfindung betrifft zudem ein Kettenfahrzeug mit einem Kettenlaufwerk, das mehrere derartige Laufräder aufweist.

Ein Laufrad für ein Kettenlaufwerk eines Kettenfahrzeugs nach dem Oberbegriff des Anspruchs 1 ist aus der US 2012/001478 A1 bekannt.

Ein weiteres Laufrad ist aus der DE 700 78 59 U bekannt. Das Laufrad ist für Gleiskettenfahrzeuge vorgesehen und weist einen Vollgummireifen auf. Eine zugehörige Felge ist aus Metall hergestellt, und zwar entweder aus einem schlecht wärmeleitenden Werkstoff oder aus einem gut wärmeleitenden Werkstoff. Bei einer Felge aus einem schlecht wärmeleitenden Werkstoff ist auf die Felge ein Ring aus einem gut wärmeleitenden Werkstoff, insbesondere aus Leichtmetall, aufgezogen. Bei einer Felge aus gut wärmeleitendem Werkstoff weist die Felge an ihrem Umfang einen ringartigen Wulst auf, der radial in das Vollgummimaterial des Vollgummireifens hineinragt.

Die US 2 039 726 A offenbart ein Laufrad für ein Schienenfahrzeug, bei der auf eine Felge ein luftbefüllter Reifen aufgezogen ist. Die Felge selbst weist einen von einem Felgenbett abragenden, ringförmigen Hohlkörper auf, der von zwei zylindrischen Schlauchabschnitten des luftbefüllten Reifens flankiert ist.

Die DE 34 13 321 A1 offenbart ein Laufrad für ein Flurfördergerät, z.B. einen Gabelstapler, wobei das Laufrad einen Vollgummireifen bestehend aus zwei Gummischichten umfasst, wobei die innere Schicht faserverstärkt gestaltet ist, wodurch die Reifenverankerung auf einem Felgenkörper verbessert wird.

Ein weiteres Laufrad für ein Kettenlaufwerk einer Pistenraupe der Marke "PistenBully 600" der Anmelderin ist aus einem Prospekt "PistenBully Special; Sommeraktion 1. April bis 15. September 2018" allgemein bekannt. Ein Kettenlaufwerk einer derartigen Pistenraupe weist zu beiden Seiten eines Fahrwerksrahmens jeweils eine Laufwerksseite auf, die ein Triebrad, mehrere Laufräder sowie ein Spannrad und eine um die verschiedenen Räder umlaufende Kette umfasst. Die Laufräder dienen zur Abstützung eines unteren Kettentrums auf einem Untergrund während eines Fahrbetriebs des Kettenlaufwerks und damit der Pistenraupe. Die Laufräder sind über geeignete Radaufhängungen an dem Fahrwerksrahmen gelagert und frei drehbeweglich.

Aufgabe der Erfindung ist es, ein Laufrad und ein Kettenfahrzeug der eingangs genannten Art zu schaffen, die hohe Fahrgeschwindigkeiten des Kettenfahrzeugs ermöglichen.

Für das Laufrad wird diese Aufgabe durch die Merkmale des Anspruchs 1 gelöst.

Die erfindungsgemäße Lösung gewährleistet zum einen eine gegenüber dem Stand der Technik erhöhte Quersteifigkeit eines Laufrads. Zum anderen ermöglicht der Ringkörper aus wärmeleitendem Material eine verbesserte Abfuhr von Reibungswärme aus dem Vollmaterialreifen während eines Fahrbetriebs des Kettenlaufwerks. Sowohl die erhöhte Quersteifigkeit als auch die verbesserte Wärmeabfuhr ermöglichen den Einsatz des erfindungsgemäßen Laufrads bei schnelllaufenden Kettenlaufwerken. Pistenraupen erreichen üblicherweise Fahrgeschwindigkeiten von maximal 40 km/h. Bei zivilen Kettenfahrzeugen, die mit höheren Geschwindigkeiten betrieben werden sollen, sind die Laufräder eines entsprechenden Kettenlaufwerks eines solchen Kettenfahrzeugs erheblich höheren Belastungen ausgesetzt als bei einer Pistenraupe, die maximal 40 km/h fährt. Dadurch ergeben sich in den Vollmaterialreifen der Laufräder erhöhte Walkbewegungen, die zu einer hohen Reibungswärme innerhalb der Vollmaterialreifen führen. Diese starke Wärmeentwicklung kann zu einem Fließen des Vollmaterials des Vollmaterialreifens führen, wodurch bekannte Laufräder beschädigt werden und ausgetauscht werden müssen. Zudem wirken auf die Laufräder eines Kettenlaufwerks eines schnellfahrenden zivilen Kettenfahrzeugs bei Kurvenfahrt erhebliche Querkräfte dadurch, dass entsprechende Spurbügel von Kettenstegen der Kette quer zur Kettenlaufrichtung wirkende Kräfte während der Kurvenfahrt auf die Laufräder ausüben. Für das erfindungsgemäße Laufrad gewährleistet der Ringkörper eine zusätzliche Abstützung des Vollmaterialreifens gegen solche Querkräfte, so dass der Vollmaterialreifen eine zusätzliche Querführung erfährt. Die Quersteifigkeit des Laufrads wird hierdurch stark verbessert. Vorzugsweise ist der Ringkörper aus Stahl hergestellt. Dies ist besonders vorteilhaft, wenn auch die Metallfelge aus Stahl hergestellt ist, da dann das Metallmaterial des Ringkörpers und der Metallfelge für einen guten Wärmeübergang perfekt aufeinander abgestimmt sind. Der Ringkörper leitet die Reibungswärme des den Ringkörper vollständig umschließenden Vollmaterialreifens während eines Fahrbetriebs radial nach innen über das Felgenbett auf die Metallfelge ab. Der Ringkörper ist vorzugsweise stoffschlüssig mit dem Felgenbett verbunden. Die Metallfelge selbst ist frei zur Umgebung, so dass die Metallfelge während des Fahrbetriebs des Kettenlaufwerks eine Luftkühlung erfährt. Das erfindungsgemäße Laufrad ist für zivile Kettenfahrzeuge einsetzbar, die als Arbeitsfahrzeuge in schwer zugänglichem Gelände agieren. Das erfindungsgemäße Laufrad ist in gleicher Weise auch für Pistenraupen einsetzbar, die von ihrer Bauart her für höhere Geschwindigkeiten als für 40 km/h ausgelegt sind. Die Erfindung unterstützt somit die Eignung des Kettenfahrzeugs für hohe Fahrgeschwindigkeiten.

Erfindungsgemäß ist der Ringkörper durchgängig ringförmig um den Umfang des Felgenbetts herum erstreckt. Der Ringkörper ist vorzugsweise mit dem Felgenbett durchgängig über den gesamten Umfang des Felgenbetts verschweißt.

Erfindungsgemäß ist der Vollmaterialreifen als Vollgummireifen gestaltet, der in radialer Richtung relativ zu der Drehachse der Metallfelge wenigstens zwei unterschiedliche Gummischichten aufweist. Dadurch können unterschiedliche physikalische Eigenschaften für den Vollgummireifen miteinander kombiniert werden. Besonders vorteilhaft sind insgesamt drei Gummischichten vorgesehen, wobei eine radial innere Gummischicht eine hohe Stabilität aufweist, um eine besonders gute Anbindung des Vollgummireifens an die Metallfelge zu ermöglichen. Eine mittlere Gummischicht legt den Fokus ihrer physikalischen Eigenschaften auf die Dämpfung und demzufolge auf die elastische Nachgiebigkeit. Eine radial äußere Gummischicht ist besonders verschleißfest gestaltet, um eine langlebige Abrollfläche für das Laufrad zu erzielen.

Erfindungsgemäß ist der Ringkörper vollständig in die innere, faserverstärkte Gummischicht eingebettet. Die radial innenliegende, faserverstärkte Gummischicht bildet die tragende Komponente des Vollgummireifens relativ zur Metallfelge. Durch den eingebetteten Ringkörper werden die Tragfunktion und die Stabilisierungsfunktion dieser radial inneren Gummischicht weiter verbessert.

In weiterer Ausgestaltung der Erfindung ist der Ringkörper durch mehrere, über den Umfang des Felgenbetts verteilt angeordnete und zueinander in Umfangsrichtung beabstandete Ringkörperabschnitte gebildet, die jeweils aus einem wärmeleitenden Material hergestellt und mit dem Felgenbett wärmeleitend verbunden sind. Diese Ausgestaltung ist vorteilhaft, um Gewicht und Material für das Laufrad einsparen zu können.

In weiterer Ausgestaltung der Erfindung ist der Ringkörper als ringförmiger Hohlkörper gestaltet. Die Gestaltung als Hohlkörper ermöglicht zum einen eine Gewichtsersparnis, da der Ringkörper nicht in Massivbauweise ausgeführt ist. Zum anderen ermöglicht die Gestaltung des Ringkörpers als ringförmiger Hohlkörper eine verbesserte Wärmeabfuhr durch entsprechend großflächigen Kontakt mit dem umgebenden Vollmaterialreifen. Schließlich ermöglicht die Gestaltung des Ringkörpers als ringförmiger Hohlkörper einen reduzierten Materialeinsatz bei dem Vollmaterialreifen. Dies ist insbesondere vorteilhaft bei einem Vollgummireifen.

In weiterer Ausgestaltung der Erfindung ist der Hohlkörper rotationssymmetrisch zu einer Drehachse der Metallfelge gestaltet. In weiterer Ausgestaltung weist der Hohlkörper einen rechteckigen Querschnitt auf, der zentrisch innerhalb des Vollmaterialreifens angeordnet ist. Die Gestaltung des Hohlkörpers mit rechteckigem Querschnitt ermöglicht eine einfache Herstellung des Hohlkörpers aus einer geeigneten Stahllegierung. Der rechteckige Querschnitt gewährleistet zudem eine besonders hohe Quersteifigkeit für das Laufrad. Die zentrische Anordnung des rechteckigen Querschnitts innerhalb des Vollmaterialreifens ermöglicht eine gleichmäßige Umschließung des Hohlkörpers durch den Vollmaterialreifen, insbesondere durch den Vollgummireifen.

Für das Kettenfahrzeug wird die der Erfindung zugrunde liegende Aufgabe dadurch gelöst, dass das Kettenlaufwerk mehrere Laufräder entsprechend wenigstens einer der zuvor beschriebenen Ausführungen aufweist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform eines erfindungsgemäßen Kettenfahrzeugs,
- Fig. 2: in vergrößerter Darstellung eine Seitenansicht eines Laufrads für das Kettenfahrzeug nach Fig. 1 und
- Fig. 3: einen Schnitt durch das Laufrad nach Fig. 2 entlang der Schnittlinie III-III in Fig. 2.

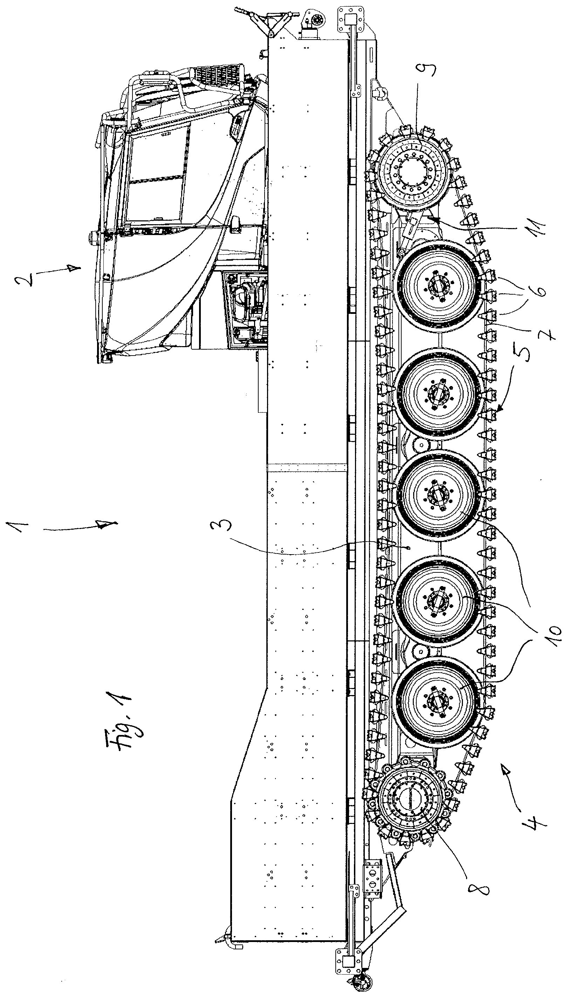

Ein ziviles Kettenfahrzeug 1 gemäß Fig. 1 weist einen auch als Fahrzeugtragrahmen bezeichneten Fahrwerksrahmen 3 auf, auf dem frontseitig - auf eine normale Fahrtrichtung des Kettenfahrzeugs 1 bezogen - ein Fahrerhaus 2 angeordnet ist. Der Fahrwerksrahmen 3 trägt ein Kettenlaufwerk, von dem in der Darstellung gemäß Fig. 1 eine rechte Laufwerksseite 4 gezeigt ist. Eine gegenüberliegende Laufwerksseite ist spiegelsymmetrisch zu einer vertikalen Mittellängsebene des Kettenfahrzeugs 1, im Übrigen jedoch identisch gestaltet. Nachfolgend wird die Laufwerksseite 4 näher beschrieben. Für die gegenüberliegende Laufwerksseite gilt das Beschriebene analog.

Die Laufwerksseite 4 weist eine umlaufende Kette 5 auf, die aus mehreren in Kettenlaufrichtung parallel nebeneinander angeordneten, flexiblen Kettenbändern sowie einer Vielzahl von quer zur Kettenlaufrichtung erstreckten Kettenstegen aufgebaut ist, wobei die Kettenstege jeweils mit den Kettenbändern fest verbunden sind. Jeder Kettensteg weist einen nach innen gerichteten Spurbügel auf, der die Führung der Kette 5 relativ zu nachfolgend beschriebenen und in Fig. 1 erkennbaren sieben Rädern gewährleistet.

Die Laufwerksseite 4 weist heckseitig, d.h. an ihrem hinteren Endbereich, ein Triebrad 8 auf, das am Fahrwerksrahmen 3 drehbar gelagert ist und über ein Antriebssystem angetrieben wird. Das Antriebssystem umfasst einen auf das Triebrad 8 wirkenden Hydromotor, der Teil eines elektrohydraulischen Antriebsstrangs ist. Der elektrohydraulische Antriebsstrang weist eine hydraulische Verteilerpumpe auf, die über einen zentralen Verbrennungsmotor angetrieben wird, der bei dem dargestellten Kettenfahrzeug 1 als Dieselmotor ausgeführt ist.

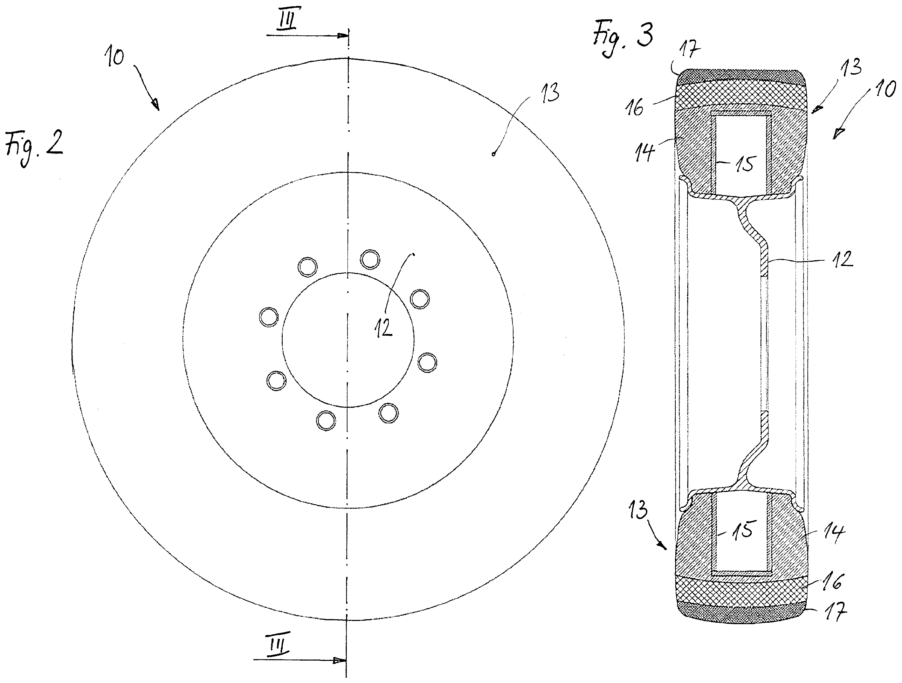

An das Triebrad 8 nach vorne schließen sich insgesamt fünf Laufräder 10 an, die nachfolgend anhand der Fig. 2 und 3 näher beschrieben sind. Die Laufräder 10 sind identisch zueinander gestaltet. Frontseitig ist die Kette 5 um ein Spannrad 9 herumgeführt, das demzufolge einen vorderen Endbereich der Laufwerksseite 4 definiert. Das Spannrad 9 ist mittels einer Spanneinrichtung 11 verstellbar, um eine Spannung der umlaufenden Kette 5 verändern zu können.

Jedes Laufrad 10 weist eine Metallfelge 12 in Form einer Stahlfelge auf, die in montiertem Zustand der Laufwerkskette 4 auf einer nicht näher bezeichneten Radnabe befestigt ist, die drehbar relativ zu einer Laufradaufhängung des Fahrwerksrahmens 3 gelagert ist. Anhand der Fig. 1 ist erkennbar, dass jeweils zwei Paare von Laufrädern 10 paarweise über zwei Pendelträgeraufhängungen an dem Fahrwerksrahmen 3 gelagert sind, wohingegen das fünfte Laufrad, das zu dem Spannrad 9 benachbart ist, separat aufgehängt am Fahrwerksrahmen 3 gelagert ist. Die Befestigung der Metallfelgen 12 aller Laufräder 10 an jeweils einer entsprechenden Radnabe ist bei allen Laufrädern identisch gestaltet.

Die Metallfelge 12 weist - im Querschnitt gesehen - ein im Wesentlichen ebenes Felgenbett auf, das sowohl nach innen zum Fahrwerksrahmen 3 hin als auch nach außen durch jeweils ein ringförmiges Felgenhorn begrenzt ist. Mit einer Oberfläche des Felgenbetts verschweißt ist ein Ringkörper 15, der ebenfalls aus Stahl besteht und als ringförmiger Hohlkörper ausgeführt ist. Wie anhand der Fig. 3 erkennbar ist, weist der ringförmige Hohlkörper, der den Ringkörper 15 bildet, einen rechteckigen Hohlquerschnitt auf, wobei der ringförmige Hohlkörper - in Fahrzeugquerrichtung - zentrisch auf dem Felgenbett befestigt ist und rotationssymmetrisch zu einer Drehachse des Laufrads 10 gestaltet ist.

Der Ringkörper 15 ist außenseitig umgeben von einem Vollgummireifen, der fest mit dem Felgenbett und den Felgenhörnern der Metallfelge 12 verbunden ist. Der Vollgummireifen 13 ist aus insgesamt drei Gummischichten aufgebaut, wobei eine radial innere erste Gummischicht 14 als cordverstärkte Gummischicht gestaltet ist, die den Ringkörper 15 außenseitig vollständig umgibt. Radial nach außen schließt an diese innere, verstärkte Gummischicht 14 eine mittlere Gummischicht 16 mit Dämpfungseigenschaften, vorzugsweise in elastisch nachgiebiger Form, an, um Stoßkräfte ausgleichen zu können, die im Fahrbetrieb des Kettenfahrzeugs 1 auf die Laufräder 10 wirken. Eine radial äußere Gummischicht 17 zeichnet sich durch ihre Verschleißfestigkeit aus und bildet eine Lauffläche des Vollgummireifens 13. Die innere, verstärkte Gummischicht 14 ist durch Vulkanisieren mit dem Felgenbett und der Innenseite der Felgenhörner sowie der Außenkontur des Ringkörpers 15 stoffschlüssig und flächig verbunden. Die mittlere Gummischicht 16 ist durch Vulkanisieren ausschließlich mit der verstärkten Gummischicht 14 und die äußere Gummischicht 17 durch Vulkanisieren ausschließlich mit der eine Zwischenlage bildenden mittleren Gummischicht 16 verbunden.

## Patentansprüche

1. Laufrad (10) für ein Kettenlaufwerk eines Kettenfahrzeugs (1) mit einer Metallfelge (12) und mit einem die Metallfelge (12) umschließenden Vollmaterialreifen (13), wobei der Metallfelge (12) ein von einem Felgenbett aus radial nach außen in den Vollmaterialreifen (13) hinein abragender Ringkörper (15) zugeordnet ist, der aus einem wärmeleitenden Material hergestellt ist und wärmeleitend mit dem Felgenbett verbunden ist, und wobei der Ringkörper (15) durchgängig ringförmig um den Umfang des Felgenbetts herum erstreckt ist, **dadurch gekennzeichnet, dass** der Vollmaterialreifen (13) als Vollgummireifen gestaltet ist, der in radialer Richtung relativ zu der Drehachse der Metallfelge (12) wenigstens zwei unterschiedliche Gummischichten aufweist, dass eine radial innere Gummischicht (14) faserverstärkt, insbesondere cordverstärkt, gestaltet ist, und dass der Ringkörper (15) vollständig in die innere, faserverstärkte Gummischicht (14) eingebettet ist.

2. Laufrad (10) nach Anspruch 1, **dadurch gekennzeichnet, dass** der Ringkörper durch mehrere über den Umfang des Felgenbetts verteilt angeordnete und zueinander in Umfangsrichtung beabstandete Ringkörperabschnitte gebildet ist, die jeweils aus einem wärmeleitenden Material hergestellt und mit dem Felgenbett wärmeleitend verbunden sind.

3. Laufrad (10) nach einem der vorhergehenden Ansprüche, **dadurch gekennzeichnet, dass** der Ringkörper (15) als ringförmiger Hohlkörper gestaltet ist.

4. Laufrad (10) nach Anspruch 3, **dadurch gekennzeichnet, dass** der Hohlkörper rotationssymmetrisch zu einer Drehachse der Metallfelge (12) gestaltet ist.

5. Laufrad (10) nach Anspruch 3 oder 4, **dadurch gekennzeichnet, dass** der Hohlkörper einen rechteckigen Querschnitt aufweist, der zentrisch innerhalb des Vollmaterialreifens (13) angeordnet ist.

6. Laufrad (10) nach Anspruch 1, **dadurch gekennzeichnet, dass** eine radial nach außen an die innere Gummischicht (14) anschließende zweite Gummischicht (16) Dämpfungseigenschaften aufweist.

7. Laufrad (10) nach Anspruch 6, **dadurch gekennzeichnet, dass** eine radial äußere Gummischicht (17) eine hohe Verschleißfestigkeit aufweist.

8. Kettenfahrzeug (1) mit einem Kettenlaufwerk, das mehrere Laufräder (10) gemäß einem der vorhergehenden Ansprüche aufweist.

## Claims

1. A road wheel (10) for a track of a tracked vehicle (1), with a metal rim (12) and with a solid material tire (13) enclosing the metal rim (12), wherein an annular element (15) protruding radially outwards from a rim base into the solid material tire (13) is associated with the metal rim (12), is made from a heat-conducting material and is connected to the rim base in heat-conducting manner, and wherein the annular element (15) extends in annular manner over the full circumference of the rim base, **characterized in that** the solid material tire (13) is designed as a solid rubber tire which has at least two different rubber layers in the radial direction relative to the rotation axis of the metal rim (12), **in that** a radially inner rubber layer (14) is designed fiber-reinforced, in particular cord-reinforced, and **in that** the annular element (15) is completely embedded inside the inner fiber-reinforced rubber layer (14).

2. The road wheel (10) according to claim 1, **characterized in that** the annular element is formed by several annular element sections, arranged distributed over the circumference of the rim base and at a distance from one another in the circumferential direction, which are each manufactured from a heat-conducting material and are connected to the rim base in heat-conducting manner.

3. The road wheel (10) according to any of the preceding claims, **characterized in that** the annular element (15) is designed as an annular hollow body.

4. The road wheel (10) according to claim 3, **characterized in that** the hollow body is designed rotationally symmetrical to a rotation axis of the metal rim (12).

5. The road wheel (10) according to claim 3 or 4, **characterized in that** the hollow body has a rectangular cross-section arranged centrally inside the solid material tire (13).

6. The road wheel (10) according to claim 1, **characterized in that** a second rubber layer (16) adjoining the inner rubber layer (14) radially outwards has shock-absorbing properties.

7. The road wheel (10) according to claim 6, **characterized in that** a radially outer rubber layer (17) has a high resistance to wear.

8. A tracked vehicle (1) with a track having several road wheels (10) according to any of the preceding claims.

## Revendications

1. Roue de roulement (10) pour un train de roulement à chenilles d'un véhicule à chenilles (1) avec une jante métallique (12) et avec un pneu en matériau plein (13) entourant la jante métallique (12), sachant qu'est associé à la jante métallique (12) un corps annulaire (15) saillant radialement vers l'extérieur dans le pneu en matériau plein (13) depuis un puits de jante, le corps annulaire (15) étant fabriqué dans un matériau thermoconducteur et est relié au puits de jante de manière thermoconductrice, et sachant que le corps annulaire (15) s'étend en continu sous forme annulaire autour de la circonférence du puits de jante, **caractérisé en ce que** le pneu en matériau plein (13) est conçu sous forme de pneu en caoutchouc plein, qui présente au moins deux couches de caoutchouc différentes dans le sens radial par rapport à l'axe de rotation de la jante métallique (12), qu'une couche de caoutchouc (14) radialement intérieure est conçue renforcée de fibres, notamment renforcée de câbles, et que le corps annulaire (15) est complètement encastré dans la couche de caoutchouc (14) intérieure, renforcée de fibres.

2. Roue de roulement (10) selon la revendication 1, **caractérisée en ce que** le corps annulaire est constitué de plusieurs sections de corps annulaire disposées réparties sur la circonférence du puits de jante et écartées les unes des autres dans le sens circonférentiel, qui sont respectivement fabriquées dans un matériau thermoconducteur et reliées au puits de jante de manière thermoconductrice.

3. Roue de roulement (10) selon l'une des revendications précédentes, **caractérisée en ce que** le corps annulaire (15) est conçu sous forme de corps creux de forme annulaire.

4. Roue de roulement (10) selon la revendication 3, **caractérisée en ce que** le corps creux est conçu symétrique en rotation par rapport à un axe de rotation de la jante métallique (12).

5. Roue de roulement (10) selon la revendication 3 ou 4, **caractérisée en ce que** le corps creux présente une section rectangulaire qui est disposée de manière centrée à l'intérieur du pneu en matériau plein (13).

6. Roue de roulement (10) selon la revendication 1, **caractérisée en ce qu'**une seconde couche de caoutchouc (16) suivant la couche de caoutchouc intérieure (14), radialement vers l'extérieur présente des propriétés d'amortissement.

7. Roue de roulement (10) selon la revendication 6, **caractérisée en ce qu'**une couche de caoutchouc radialement extérieure (17) présente une résistance élevée à l'usure.

8. Véhicule à chenilles (1) avec un train de roulement à chenilles, qui présente plusieurs roues de roulement (10) conformément à l'une des revendications précédentes.
